# EUROPEAN PATENT SPECIFICATION

(11) **EP 4 290 230 B1**
(45) Date of publication and mention of the grant of the patent: **29.01.2025**
(21) Application number: 22382558.9
(22) Date of filing: 10.06.2022
(51) Int. Cl.: G01N 29/04, G01N 29/22, G01N 29/265

(54) **ULTRASONIC INSPECTION MACHINE FOR PERFORMING NON-DESTRUCTIVE ULTRASONIC INSPECTIONS ON WIND TURBINE BLADES**
ULTRASCHALLPRÜFUNGSMASCHINE FÜR DIE ZERSTÖRUNGSFREIE ULTRASCHALLPRÜFUNG VON WINDTURBINENSCHAUFELN
MACHINE D'INSPECTION À ULTRASONS POUR EFFECTUER DES INSPECTIONS ULTRASONIQUES NON DESTRUCTIVES SUR DES PALES D'ÉOLIENNE

(43) Date of publication of application: 13.12.2023
(73) Proprietor: Endity Solutions S.L., 20570 Gipuzkoa (ES)
(72) Inventor: Castro Casas, Ivan, Gipuzkoa (ES); Aizpurua Maestre, Iratxe, Gipuzkoa (ES); Gutierrez, Hector, Gipuzkoa (ES)
(74) Representative: Balder IP Law, S.L.

(56) References cited:
- CN-A- 114 379 666
- CN-U- 206 146 611
- CN-U- 209 231 231
- CN-U- 212 111 259

## Description

### TECHNICAL FIELD

The present invention relates to ultrasonic inspection devices for non-destructive testing of materials, particularly for wind turbine blades.

### STATE OF THE ART

An ultrasonic inspection machine is known from CN 114 379 666 A.

Ultrasonic non-destructive testing (NDT) is a commonly used option for inspecting wind turbine blades. Blade structures differ between manufacturers. Many types have a main structural beam, either a box spar or shear web(s) enclosed by half-shells that transfer the aerodynamic load. Large blades are typically manufactured using composite materials such as fiber reinforced materials.

Ensuring the integrity of the generation equipment plays an important role for reliable energy production. Therefore, non-destructive test procedures are required, especially for turbine blades, which are subject to severe operational conditions due to phenomena such as lightning strikes, mechanical stress, humidity and corrosion. Non-destructive ultrasonic test techniques are commonly applied in their predictive maintenance. Wind turbine blades are complicated objects for inspection because they have a curved surface, are multilayered, have variable thickness and are made from anisotropic materials.

Inspection machines used for ultrasonic NDT of wind-turbine blades are typically portable equipment. Ultrasonic testing of wind turbine blade using conventional portable inspection machines is burdensome and, time-taking which are drawbacks which have not been effectively solved in prior art.

### DESCRIPTION OF THE INVENTION

A first aspect of the invention relates to solving the drawbacks of conventional inspection machines for ultrasonic NDT of wind-turbine blades. According to this first aspect, this invention provides an ultrasonic inspection machine for performing non-destructive testing on wind turbine blades comprising a movable base, a robotic handling device arranged on the movable base, a robot head mounted to the handling device, an ultrasonic inspection system comprising a scanning head comprising at least one ultrasonic testing sensor, the scanning head arranged on the robot head capable of slidingly contacting an outer blade surface of a wind turbine blade, and a first power supply system for providing electric power to the robotic handling device, the robot head and the ultrasonic inspection system, wherein the inspection machine further comprises
a blade marking device for marking positioning marks on the outer blade surface;
a machine vision camera and an illumination device for identifying a working window on the outer blade surface each working window being delimited by a positioning mark marked by the blade marking device;
a distance sensor for detecting the distance between the outer blade surface and the inspection machine;
and wherein
the blade marking system, the machine vision camera, the illumination device, and the distance sensor are arranged on the robot head;
the robotic handling device comprises a driving system for displacing the robot head vertically and horizontally with respect to each working window.

The robotic handling device is preferably a 6-axis anthropomorphic robot providing free movement of the robot head over the outer blade surface. The blade marking device may be is a stamping device.

In a preferred embodiment, each working window is horizontally and vertically delimited by a positioning mark marked by the blade marking device and comprises sweep area defined between a first vertical line and a first horizontal line both extending from said positioning mark and a second vertical line which is opposite and parallel to the first vertical line and a second horizontal line which is opposite to the first horizontal line.

The scanning head preferably comprises an array of horizontally aligned ultrasonic testing sensors.

The ultrasonic inspection system may further comprise a water managing system including at least one water irrigation device positioned, when the irrigation device is in a water-ejecting position, above the scanning head to sprinkle water between the front surface of the scanning head and the outer blade surface such that the water flows downwards on the outer blade surface acting as a water film that sonically couples each ultrasonic testing sensor with the outer blade surface. Each irrigation device may be connected to a water supply tank by means of a water supply pumping unit.

The ultrasonic inspection system the water management system may comprise a water collecting tray positioned, when the irrigation device is in a water-ejecting position, below the scanning head to collect water dropping from the water film. The collecting tray may be connected to a water collecting tank by means of a water suction pump unit.

In a preferred embodiment, the movable base comprises an automatically guided vehicle for moving the inspection machine hence and forth with respect to the outer blade surface along a horizontal path which comprises a plurality working windows.

The movable base may also comprise a support platform on which the robotic handing device is mounted.

The automatically guided vehicle preferably comprises a programmable electronic navigation system for moving the inspection machine along the working windows.

Further, the automatically guided vehicle preferably comprises driving wheels propelled by at least one electric motor fed by a second power supply system. In an embodiment, the second power supply system comprises at least one rechargeable battery mounted on the movable base.

### BRIEF DESCRIPTION OF THE DRAWINGS

To complete the description and in order to provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:
Figure 1 shows a front perspective view of an embodiment of the ultrasonic inspection machine according to the invention.
Figure 2 shows a rear perspective view of the embodiment of the ultrasonic inspection machine shown in figure 1.
Figure 3 shows a further perspective view of the embodiment of the ultrasonic inspection machine shown in figure 1.
Figure 4 shows a rear perspective view of the automatically guided vehicle of the embodiment of the ultrasonic inspection machine shown in figure 1.
Figure 5 shows a rear perspective view of the support platform of the ultrasonic inspection machine shown in figure 1.
Figure 6 shows front perspective view of the robotic handling device shown of the ultrasonic inspection machine shown in figure 1.
Figure 7 shows a front perspective view of the robot head of the ultrasonic inspection machine shown in figure 1.
Figure 7A shows a schematic diagram of an embodiment of a water managing system in the ultrasonic inspection machine according to the invention
Figure 8 shows a rear perspective view of the blade marking device of the robot head shown in figure 7.
Figure 9 shows a front perspective view of the machine vision camera, illumination device and distance sensor.
Figure 10 shows a partial view of the ultrasonic inspection machine shown in figure 1 inspecting a wind turbine blade in one stage of operation.
Figure 11 schematically shows a side view of a wind turbine blade and a front view of the acoustic inspection machine in another stage of operation.
Figure 11A shows enlarged view of the positioning mark shown if figure 11.
Figure 12 schematically shows a view of the path of the robot head when scanning the sweep area of a scanning window.

In these figures, there are reference signs corresponding to elements as shown as shown hereafter:
- A1: first axis
- A2: second axis
- A3: third axis
- A4: fourth axis
- A5: fifth axis
- A6: sixth axis
- HL1: first vertical line
- HL2: first horizontal line
- HP: horizontal path
- PM, PM': positioning mark
- SA: sweep area
- VL1: second vertical line
- VL2: second horizontal line
- WW: working window
- 1: ultrasonic inspection machine
- 2: automatically guided vehicle
- 3: support platform
- 3a: smartpad
- 4: robotic handling device
- 4a: support base
- 4b: first arm
- 4c: second arm
- 4d: third arm
- 4f: rod
- 4g: connecting plate
- 4r: fourth arm
- 2, 3: movable base
- 5: robot head
- 6: scanning head
- 7: ultrasonic testing sensor
- 8: blade marking device
- 9: machine vision camera
- 10: illumination device
- 11: distance sensor
- 12: water managing system
- 12a: water irrigation device
- 12b: water supply tank
- 12c: water collecting tank
- 12d: water supply pumping unit
- 12e: water suction pump unit
- 12f: water filter
- 12g: water supply line
- 12h: water suction line
- 12i: distributor module
- 12j: water evacuation line
- 13: water collecting tray
- 14: rechargeable battery
- 15: second power supply system
- 16: wind turbine blade
- 16a: outer blade surface
- 16b: dark strip area
- 17: first cabinet
- 18: second cabinet
- 18a: console
- 19: operation state traffic light
- 20: assistance sensor
- 21: safety unit

### DESCRIPTION OF WAYS OF CARRYING OUT THE INVENTION

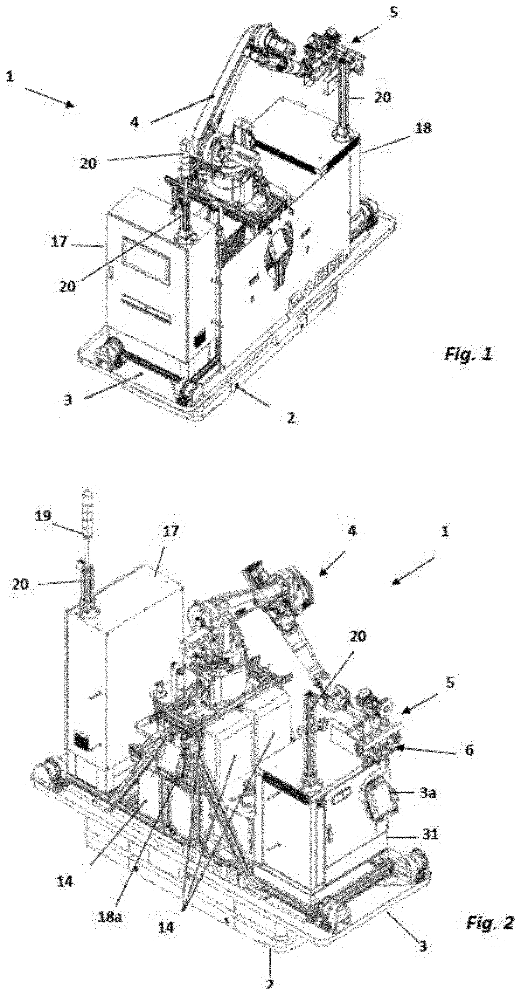

In the embodiment shown in figures 1-10, the ultrasonic inspection machine -1- for performing non-destructive testing on wind turbine blades -16- comprises a movable base -2, 3-, robotic handling device -4- arranged on the movable base -2, 3-, a robot head -5-mounted to the handling device -4-, an ultrasonic inspection system housed inside a first cabinet -17- and including a scanning head -6- that comprises at least one ultrasonic testing sensor -7-. The scanning head -6- is arranged on the robot head -5- and capable of slidingly contacting an outer blade surface -16a- of a wind turbine blade -16-.

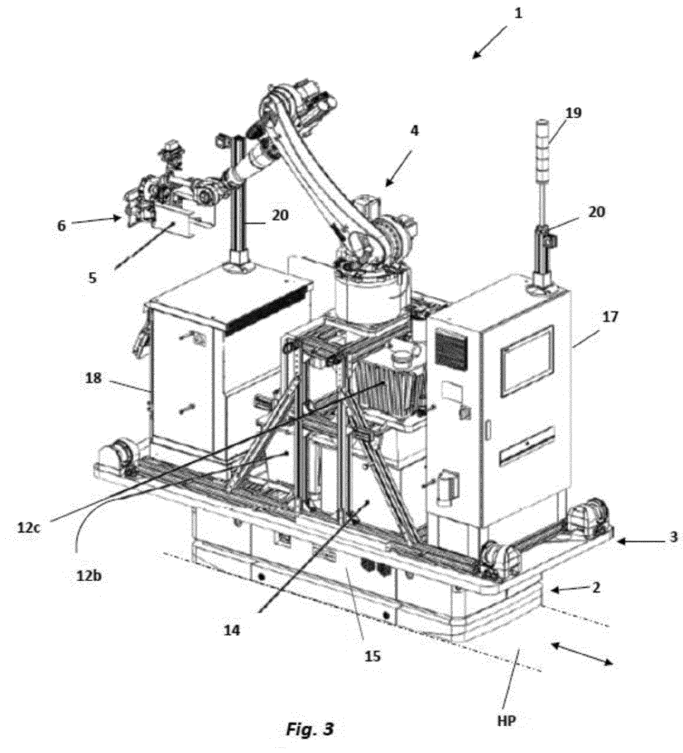

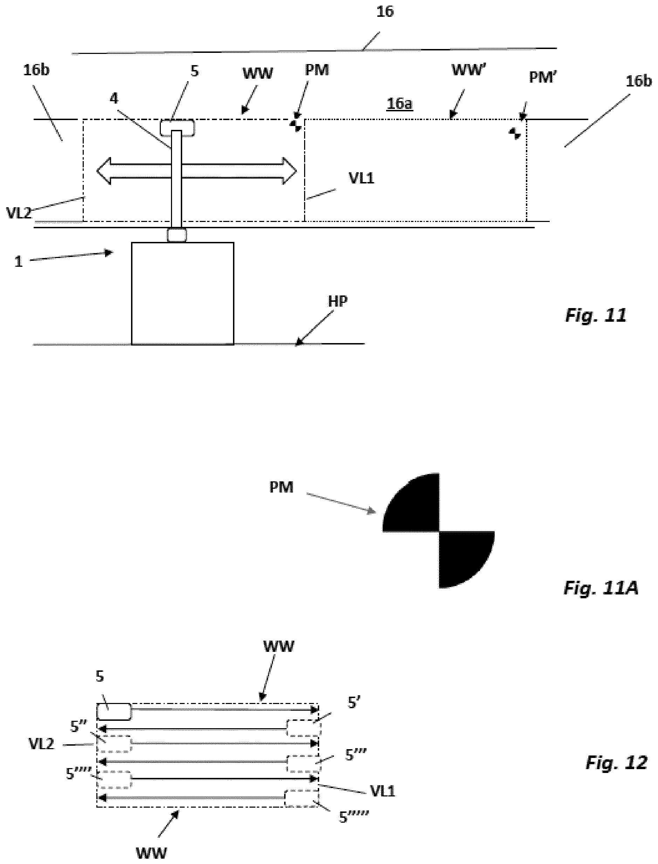

The movable base -2, 3- comprises an automatically guided vehicle -2- for moving the inspection machine -1- hence and forth with respect to the outer blade surface -16a- along a horizontal path -HP- (cf. figures 3, 11), and a support platform -3- on which the robotic handing device -4- is mounted. The automatically guided vehicle -2- may be based on a *per se* conventional mobile platform as the KMP 1500 mobile platform of KUKA AG, Augsburg, Germany, and comprises a programmable electronic navigation system (not shown in the drawings) for moving the inspection machine -1- along the working windows -WW-. The automatically guided vehicle -2- is moved by driving wheels connected to respective electric motors and controlled by a motor control unit (not shown in the drawings). The automatically guided vehicle -2- is controlled by means of a robot controller including smartpad -3a- as for example a KUKA smartpad.

The first cabinet -17- and a second cabinet -18- are mounted on opposite end portions of a framework of the support platform -3-. The first cabinet -17- houses the ultrasonic inspection system (not shown in the drawings) whilst the second cabinet -18-houses a robot control unit for the robotic handling device -4-.

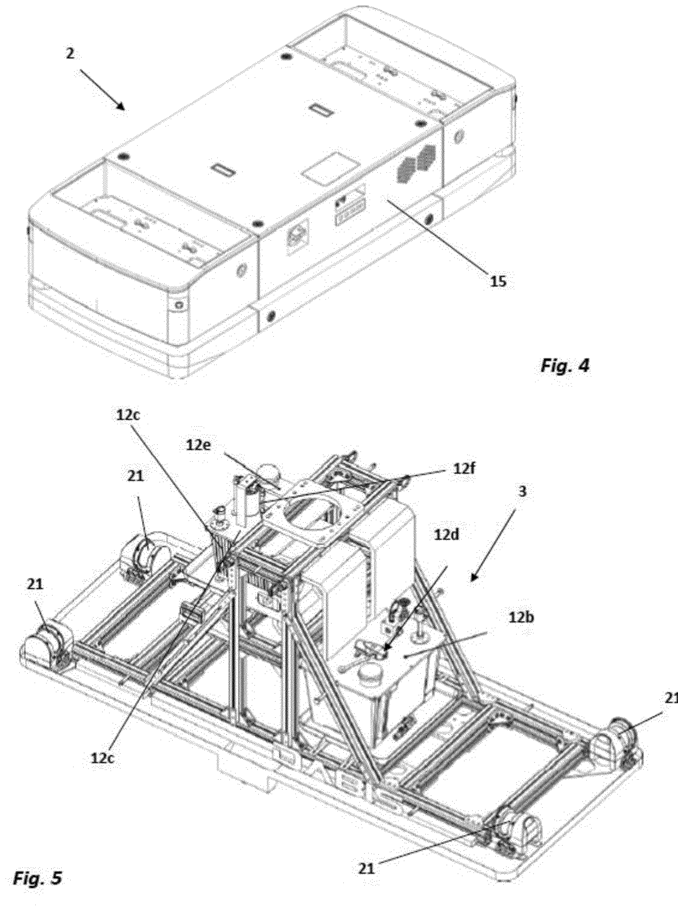

Between the cabinets -17, 18- there is a middle framework portion with an upper part on which the robotic handling device -4- is mounted. A first power supply system comprising a number of rechargeable batteries -14- of a first power supply system, and a water managing system -12-, are mounted on the middle framework portion below the upper part of the middle framework portion, The first power supply system delivers electric power to the robotic handling device -4-, to the robot head -5- and to the ultrasonic inspection system. At the four corner portions of the support platform -3- there are arranged respective safety units -21- (cf. figure 5) connected to the navigation system of the ultrasonic inspection machine -1-. The safety units -21- are proximity scanners which emit beams aligned in the vertical plane to avoid possible collisions of the elements mounted on the support platform -3- with fixed and/or moving objects. An operation state traffic light -19- is mounted on the safety unit -21- mounted on the first cabinet -17- to emit luminous signals which are indicative of the operation status of the inspection machine -1- and thereby provide alerts concerning the operation status to operating personnel and other persons.

An assistance sensor -20- is mounted respectively on each of the top portions of the cabinets -17, 18-. Each of the assistance sensors -20- is also connected to the navigation system of the ultrasonic inspection machine -1-. The assistance sensors -20- detect the specific location of the component to be inspected and position of the inspection machine at each time.

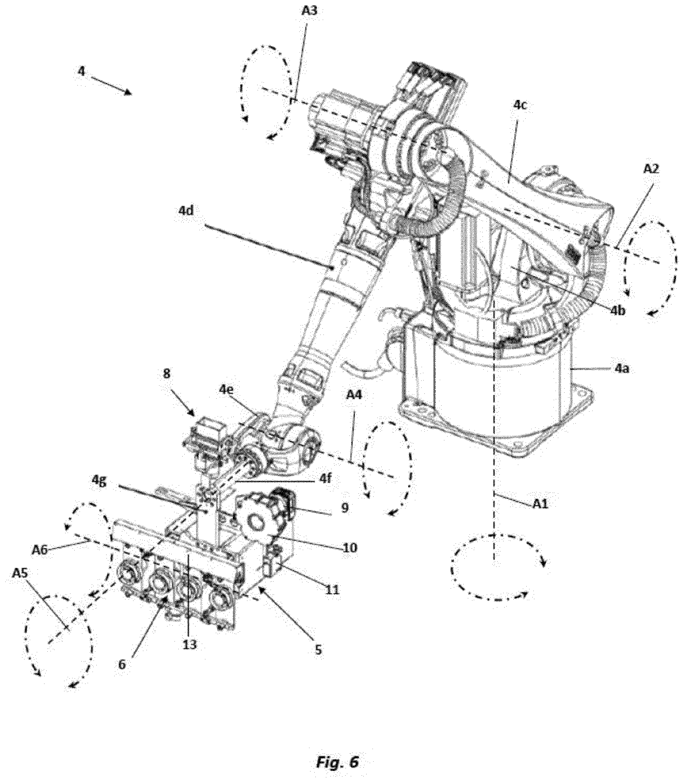

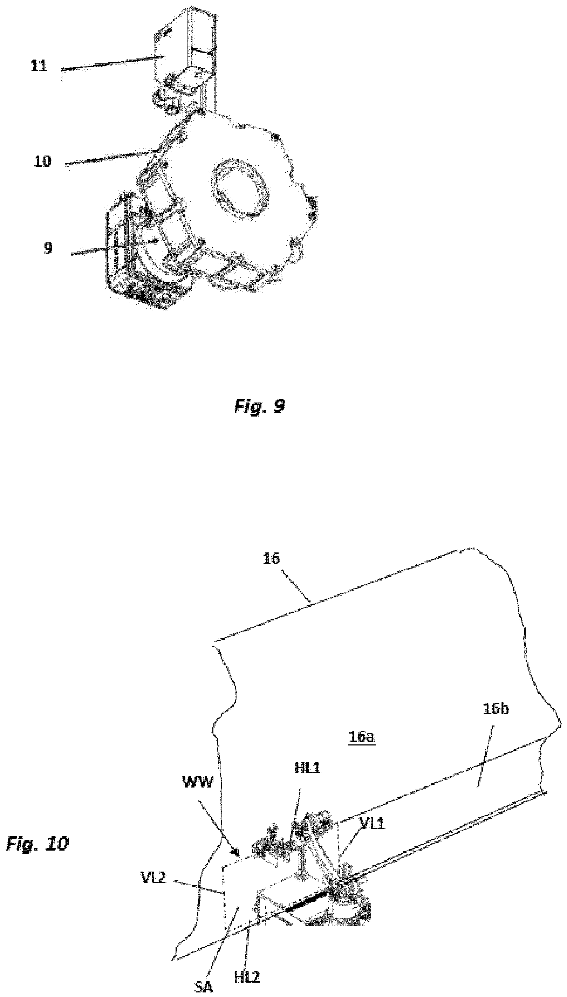

The inspection machine further comprises a blade marking device -8- (cf. figure 6) for marking positioning marks (PM, PM' - cf. figures 11, 11A) on the outer blade surface -16a-, a machine vision camera -9- (cf. figure 6) and an illumination device -10- (cf. figure 6) for identifying a working window -WW - (cf. figures 10, 11, 12) on the outer blade surface -16a-. Each working window -WW- is delimited by a positioning mark -PM- marked by the blade marking device -8-, and a distance sensor -11- for detecting the distance between the outer blade surface -16a- and the inspection machine -1-. The blade marking device -8-, the machine vision camera -9- and the illumination device -10- are also arranged on the robot head .5.

By means of the machine vision camera -9- and the illumination device -10- it becomes possible to detect the working windows (WW) due to a *per se* known vision algorithm which evaluates the changes in contrast on the outer blade surface -16a-, and to detect previously applied position marks to enable it to continue at the same height of the outer blade surface -16a- where it had been positioned previously. The distance sensor (11) detects the distance between the outer blade surface -16a- and the inspection machine -1- and the vision algorithm evaluates the quality of both, the position mark -PM- and the changes in contrast within the inspected material, using a machine learning algorithm based on predefined templates (figure 11a).

The robotic handling device -4- shown in figure 6, is a 6-axis anthropomorphic robot which confers free movement of the robot head -5- over the outer blade surface -16a-. The robotic handling device -4- is connected to a robot control unit housed in the second cabinet -18- which comprises a console -18a- for the operation of the anthropomorphic robot (cf. figure 2). The robotic handling device -4- comprises a support base (4a) fastened to the support platform -3-, a first arm -4b-, a second arm -4c-, a third arm -4d-, a fourth arm -4e-, a rod -4f- and a final connecting plate -4g-. The first arm -4b- is connected to the support base -4a- rotatably about a vertical first axis -A1-. The first arm -4c- is connected to the second arm -4c- rotatably about a horizontal second axis -A2-. The second arm -4c- is connected to the third arm -4d- rotatably about a horizontal third axis -A3-. The third arm -4d- is connected to the fourth arm -4e- rotatably about a horizontal fourth axis -A4-. The fourth arm -4e- is connected to the rod -4f- rotatably about a longitudinal fifth axis -A5-. The rod -4f-is fixed to the connecting plate -4g-, and the connecting plate -4g- is connected to the robot head -5-tiltingly with respect to a horizontal sixth axis -A6-. By this arrangement, the anthropomorphic robot and the robot head may freely adopt almost any position with respect to the blade surface -16a-. Displacement of the aforesaid elements about said axis -A1, A2, A3, A4, A5, A6- is actuated in a *per se* conventional manner by means of actuator devices driven by electric motors (not shown in the drawings).

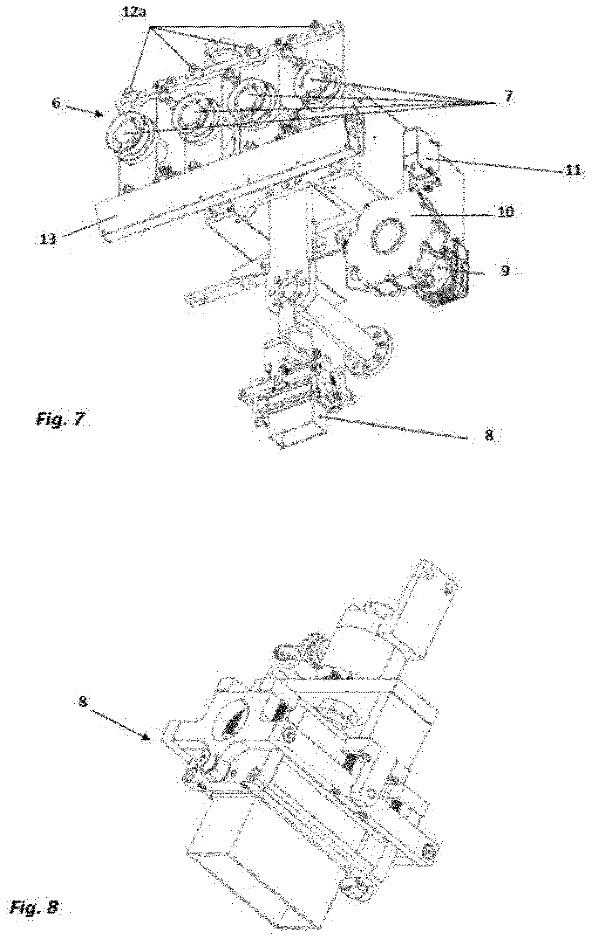

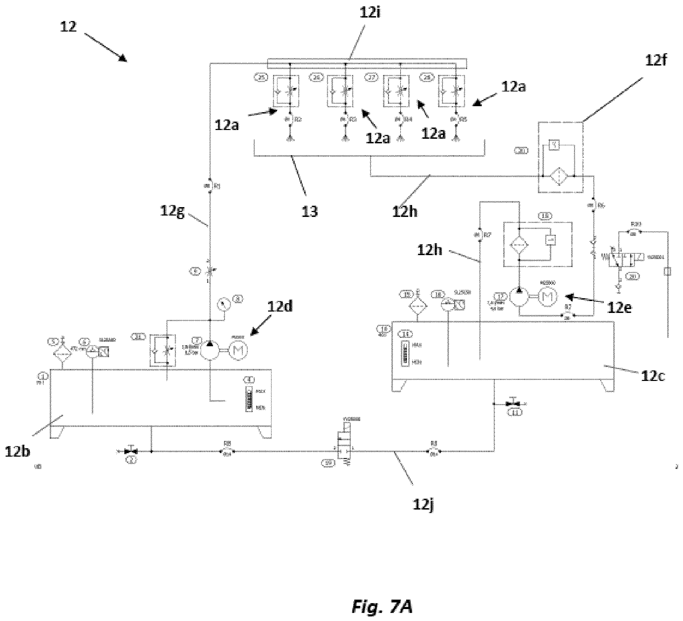

Figure 7 depicts that the blade marking system -8-, the machine vision camera -9-, the illumination device -10-, and the distance sensor -11- are arranged on the robot head -5-. The robotic handling device -4- comprises a driving system for displacing the robot head -5-vertically and horizontally with respect to each working window -WW-. The blade marking device -8- (cf. figure 8) is a commercially available stamping device (Printer 40 [COLOP]) mounted in a damped linear guided metallic structure which enables stamping the position marks -PM, PM'- on the outer blade surface (16a) (cf. figure 11, 11A) and thereafter repositioning the automatically guided vehicle (2) to a position from where UT scanning of the wind turbine blade -16- may be continued.

The scanning head -6- is equipped with an array of horizontally aligned UT M2008 ultrasonic testing sensors -7-. These sensors allow the surface in question to be scanned using ultrasound.

The ultrasonic inspection system further comprises a water managing system -12- (cf. figures 6, 7A) including four water irrigation devices -12a- connected to a distributor module -12i- positioned, when the irrigation device -12a- is in a water-ejecting position, above the scanning head -6- to irrigate water between the front surface of the scanning head -6- and the outer blade surface -16a- such that the water flows downwards on the outer blade surface -16a- acting as a water film that sonically couples each ultrasonic testing sensor -7-with the outer blade surface -16a-. Each irrigation device -12a- is connected to a water supply tank -12b- by means of a water supply line -12g-to which a water supply pumping unit -12d- is connected.

The water management system -12- also comprises a water collecting tray -13-positioned, when the irrigation device -12- is in a water-ejecting position, below the scanning head -6- to collect water dropping from the water film. The collecting tray -13- is connected to a water collecting tank -12c- by means of a water suction line -12h which is connected to a water suction pump unit -12e-. A water filter -12f- is connected to the water suction line -16h upstream the water suction pump unit -12e-.

The water supply tank -12b- and the water collecting tank -12c-are both connected to a water evacuation line -12j-

As shown in figures 10, 11 and 12, each working window -WW- is a rectangular working window -WW- which is horizontally and vertically delimited based on a positioning mark -PM- (cf. figure 12) the applied by the blade marking device -8- and comprises a sweep area -SA-. The sweep area -SA- is defined between a first vertical line -VL1- and a first horizontal line -HL1- both extending from a corner where said positioning mark -PM- has been applied, and a second vertical line -VL2- which is opposite and parallel to the first vertical line -VL1- and a second horizontal line -HL2- which is opposite to the first horizontal line -HL1-. The horizontal and vertical extensions of each sweep area -SA- of the working window -WW- are known to the programmable control logic governing the robotic handling device -4-.

As shown in figures 12, the robot head -5- is moved horizontally by the robotic handling device -4- from one side to the other of the working window -WW- and scans a horizontal strip of the working window -WW- each time that it scans a horizontal strip. After having scanned a horizontal strip, the robot head -5- is moved vertically by the robotic handling device -4- to the vertically adjacent horizontal strip of the working window -WW-. These vertical and horizontal movements of the robot head are performed until the whole sweep area -SA- of the working window -WW- has been scanned. The robot head in its initial position when scanning the horizontal strips is identified by reference signs -5-, -5'-, -5"-, - 5‴, -5ʺʺ- and -5‴ʺ- respectively.

Once a working window -WW- has been scanned, the robot head -5- rotates 90 degrees around A4 robot axis to allow stamping the positioning mark -PM- After the stamping process, the robot head -5- comes back to the original position rotating -90 degrees around A4 robot axis and it displaces horizontally (cf. figure 11) until detecting a subsequent positioning mark -PM'- on the basis of which a subsequent working window -WW'- is determined, and scanning of the whole sweep area -SA- of the working window -WWi- has been scanned according to the steps described here before with respect to the previous working window -WW-.

In this text, the terms first, second, third, etc. have been used herein to describe several devices, elements or parameters, it will be understood that the devices, elements or parameters should not be limited by these terms since the terms are only used to distinguish one device, element or parameter from another. For example, the first axis could as well be named second axis, and the second axis could be named first axis without departing from the scope of this disclosure.

In this text, the term "comprises" and its derivations (such as "comprising", etc.) should not be understood in an excluding sense, that is, these terms should not be interpreted as excluding the possibility that what is described and defined may include further elements, steps, etc.

On the other hand, the invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. An ultrasonic inspection machine (1) for performing non-destructive testing on wind turbine blades (16) comprising
a movable base (2, 3),
a robotic handling device (4) arranged on the movable base (2, 3),
a robot head (5) mounted to the handling device (4),
an ultrasonic inspection system comprising a scanning head (6) comprising at least one ultrasonic testing sensor (7), the scanning head (6) arranged on the robot head (5) capable of slidingly contacting an outer blade surface (16a) of a wind turbine blade (16),
a first power supply system for providing electric power to the robotic handling device (4), the robot head (5) and the ultrasonic inspection system,
**characterized in that** the inspection machine (1) further comprises
a blade marking device (8) for marking positioning marks (PM, PM') on the outer blade surface (16a);
a machine vision camera (9) and an illumination device (10) for identifying a working window (WW) on the outer blade surface (16a) each working window (WW) being delimited by a positioning mark (PM) marked by the blade marking device (8);
a distance sensor (11) for detecting the distance between the outer blade surface (16a) and the inspection machine (1);
and **in that**
the blade marking system (8), the machine vision camera (9), the illumination device (10), and the distance sensor (11) are arranged on the robot head (5);
the robotic handling device (4) comprises a driving system for displacing the robot head (5) vertically and horizontally with respect to each working window (WW).

2. An ultrasonic inspection machine according to claim 1, wherein the robotic handling device (4) is a 6-axis anthropomorphic robot providing free movement of the robot head (5) over the outer blade surface (16a)

3. An ultrasonic inspection machine according to any of claims 1 to 2, wherein the blade marking device (8) is a stamping device.

4. An ultrasonic inspection machine according to any of claims 1 to 3, wherein each working window (WW) is horizontally and vertically delimited by a positioning mark (PM) marked by the blade marking device (8) and comprises sweep area (SA) defined between a first vertical line (VL1) and a first horizontal line (HL1) both extending from said positioning mark (PM) and a second vertical line (VL2) which is opposite and parallel to the first vertical line (VL1) and a second horizontal line (HL2) which is opposite to the first horizontal line (HL1).

5. An ultrasonic inspection machine according to any of claims 1 to 4, wherein the scanning head (6) comprises an array of horizontally aligned ultrasonic testing sensors (7).

6. An ultrasonic inspection machine according to any of claims 1 to 5, wherein the ultrasonic inspection system further comprises a water managing system (12) including at least one water irrigation device (12a) positioned, when the irrigation device (12a) is in a water-ejecting position, above the scanning head (6) to sprinkle water between the front surface of the scanning head (6) and the outer blade surface (16a) such that the water flows downwards on the outer blade surface (16a) acting as a water film that sonically couples each ultrasonic testing sensor (7) with the outer blade surface (16a).

7. An ultrasonic inspection machine according to claim 6, wherein the ultrasonic inspection system the water management system (12) comprises a water collecting tray (13) positioned, when the irrigation device (12a) is in a water-ejecting position, below the scanning head (6) to collect water dropping from the water film.

8. An ultrasonic inspection device according to claim 6 or 7, wherein each irrigation device (12a) is connected to a water supply tank (12b) by means of a water supply pumping unit (12d).

9. An ultrasonic inspection machine according to claim 7, wherein the collecting tray (13) is connected to a water collecting tank (12c) by means of a water suction pump unit (12e).

10. An ultrasonic inspection machine according to any of claims 1 to 9, wherein the movable base (2, 3) comprises an automatically guided vehicle (2) for moving the inspection machine (1) hence and forth with respect to the outer blade surface (16a) along a horizontal path (HP) which comprises a plurality working windows (WW).

11. An ultrasonic inspection machine according to claim 10, wherein the movable base (2, 3) comprises a support platform (3) on which the robotic handing device (4) is mounted.

12. An ultrasonic inspection machine according to claim 10 or 11, wherein the automatically guided vehicle (2) comprises a programmable electronic navigation system for moving the inspection machine (1) along the working windows (WW).

13. An ultrasonic inspection machine according to claim 10, 11 or 12, wherein the automatically guided vehicle (2) comprises driving wheels propelled by at least one electric motor fed by a second power supply system (15).

14. An ultrasonic inspection machine according to claim 13, wherein the second power supply system (15) comprises at least one rechargeable battery mounted on the movable base (2, 3).

## Patentansprüche

1. Ein Ultraschallprüfgerät (1) zur zerstörungsfreien Überprüfung von Windmühlenblättern (16), umfassend
- eine bewegliche Basis (2,3),
- eine robotergesteuerte Bedienungseinheit (4), welche auf der beweglichen Basis (2,3) angeordnet ist,
- einen auf der robotergesteuerten Bedienungseinheit (4) angebrachten Roboterkopf (5),
- ein Ultraschallprüfsystem umfassend einen Abtastkopf (6) umfassend wenigstens einen Ultraschalltestsensor (7), den an dem Roboterkopf (5) angebrachten Abtastkopf (6), wobei der Abtastkopf in gleitendem Kontakt mit einer äußeren Oberfläche (16a) eines Windmühlenblattes (16) steht,
- ein erstes Stromzufuhrsystem für die Bereitstellung elektrischer Leistung an die robotergesteuerte Bedienungseinheit (4), den Roboterkopf (5) und das Ultraschallprüfsystem,
**dadurch gekennzeichnet, dass** das Prüfgerät (1) weiterhin
- eine Markiervorrichtung (8) zum Markieren einzelner Blätter (PM, PM') der äußeren Blattoberflächen (16a);
- eine maschinelle Bildverarbeitungskamera (9) und ein Belichtungsgerät (10) zur Identifikation eines Arbeitsfensters (WW) der äußeren Blattoberflächen (16a), wobei jedes einzelne Arbeitsfenster (WW) eine Positionierungsmarkierung (PM) der Markiervorrichtung (8) aufweist;
- einen Abstandssensor (11) für die Abstandsmessung zwischen der äußeren Blattoberläche (16a) und des Prüfgeräts (1);
und darin
- die Markiervorrichtung (8), die maschinelle Bildverarbeitungskamera (9), das Belichtungsgerät (10) und der Abstandssensor (11) auf dem Roboterkopf (5) angebracht sind;
- der robotergesteuerten Bedienungseinheit (4) ein Antriebssystem für die in Bezug auf jedes Arbeitsfenster (WW) vertikale und horizontale Bewegung des Roboterkopfes (5).

2. Ultraschallprüfgerät gemäß Anspruch 1, wobei die robotergesteuerte Bedienungseinheit (4) ein 6-achsiger anthropomorpher Roboter ist, der eine freie Bewegung des Roboterkopfes (5) über die äußere Blattoberfläche (16a) bereitstellt.

3. Ultraschallprüfgerät gemäß einem der Ansprüche 1 oder 2, wobei die Markiervorrichtung (8) eine Prägevorrichtung ist.

4. Ultraschallprüfgerät gemäß einem der Ansprüche 1 bis 3, wobei jedes Arbeitsfenster (WW) horizontal und vertikal durch eine von der Markiervorrichtung (8) markierten Positionsmarkierung (PM) beschränkt ist und einen Sweep-Bereich (SA) zwischen einer ersten vertikalen Linie (VL1) und einer ersten horizontalen Linie (HL1) afuweist, die sich beide von besagter Positionsmarkierung (PM) erstrecken und eine zweite vertikale Linie (VL2), die der ersten vertikalen Linie (VL1) gegenüberliegt und parallel zu ihr verläuft, und eine zweite horizontale Linie (HL2), die der ersten horizontalen Linie (HL1) gegenüberliegt.

5. Ultraschallprüfgerät gemäß einem der Ansprüche 1 bis 4, wobei der Abtastkopf (6) ein Array horizontal ausgerichteter Ultraschalltestsensoren (7) aufweist.

6. Ultraschallprüfgerät gemäß einem der Ansprüche 1 bis 5, wobei das Ultraschallprüfsystem weiterin ein Wassermanagementsystem (12) umfasst, mit mindestens einer Wassersprühvorrichtung (12a), die, wenn sich die Sprühvorrichtung (12a) in einer Wasserausstoßposition befindet, oberhalb des Abtastkopfes (6) angeordnet ist, um Wasser zwischen die Vorderfläche des Abtastkopfes (6) und der äußeren Blattoberfläche (16a) zu sprühen, sodass das Wasser abwärts entlang der äußeren Blattoberfläche (16a) fließt und als ein Wasserfilm fungiert, der jeden Ultraschalltestsensor (7) akustisch mit der äußeren Blattoberfläche (16a) koppelt.

7. Ultraschallprüfgerät gemäß Anspruch 6, wobei das Wassermanagementsystem (12) mit einer Wasserauffangschale (13) umfasst, die, wenn sich die Bewässerungsvorrichtung (12a) in einer Wasserausstoßposition befindet, unterhalb des Abtastkopfes (6) angeordnet ist, um vom Wasserfilm herabtropfendes Wasser aufzufangen.

8. Ultraschallprüfgerät gemäß Anspruch 6 oder 7, wobei jede Bewässerungsvorrichtung (12a) mittels einer Pumpanlage (12d) für die Wasserversorgung mit einem Wasserversorgungstank (12b) verbunden ist.

9. Ultraschallprüfgerät gemäß Anspruch 7, wobei die Auffangwanne (13) mit einem Wasserauffangbehälter (12c) über eine Wasserabsaugpumpeneinheit (12e) verbunden ist.

10. Ultraschallprüfgerät gemäß einem der vorhergehenden Ansprüche, wobei die bewegliche Basis (2,3) ein automatisch geführtes Fahrzeug (2) zum Hin- und Herbewegen der inspektionsmaschine (1) in Bezug auf die äußeren Blattoberflächen (16a) entlang eines horizontalen Pfades (HP) umfasst, welcher eine Vielzahl an Arbeitsfenstern umfasst.

11. Ultraschallprüfgerät gemäß Anspruch 10, wobei die bewegliche Basis (2,3) eine Unterstützungsplattform (3) umfasst, auf welcher die robotergesteuerte Bewegungseinheit (4) angebracht ist.

12. Ultraschallprüfgerät gemäß Anspruch 10 oder 11, wobei das automatisch geführte Fahrzeug (2) ein programmierbares elektronisches Navigationssystem zum Bewegen des Prüfgeräts (1) entlang der Arbeitsfenster (WW) umfasst.

13. Ultraschallprüfgerät gemäß Anspruch 10, 11 oder 12, wobei das automatisch geführte Fahrzeug (2) Antriebsräder aufweist, die von mindestens einem Elektromotor angetrieben werden, der von einem zweiten Stromversorgungssystem (15) gespeist wird.

14. Ultraschallprüfgerät gemäß Anspruch 13, wobei das zweite Stromversorgungssystem (15) mindestens eine wiederaufladbare Batterie umfasst, die auf der beweglichen Basis (2,3) montiert ist.

## Revendications

1. Machine d'inspection par ultrasons (1) pour effectuer des contrôles non destructifs sur des pales d'éoliennes (16) comprend
une base mobile (2, 3),
un dispositif de manipulation robotique (4) disposé sur la base mobile (2, 3),
une tête de robot (5) montée sur le dispositif de manipulation (4),
un système d'inspection par ultrasons comprenant une tête de balayage (6) comprenant au moins un capteur de contrôle par ultrasons (7), la tête de balayage (6) disposée sur la tête de robot (5) capable d'entrer en contact par glissement avec une surface extérieure de la pale (16a) d'une pale d'éolienne (16),
un premier système d'alimentation électrique pour fournir de l'énergie électrique au dispositif de manipulation robotique (4), à la tête de robot (5) et au système d'inspection par ultrasons,
**caractérisé en ce que** la machine d'inspection (1) comprend en outre
un dispositif de marquage de pale (8) pour marquer des repères de positionnement (PM, PM') sur la surface extérieure de la pale (16a) ;
une caméra visionique (9) et un dispositif d'éclairage (10) pour identifier une fenêtre de travail (WW) sur la surface extérieure de la pale (16a), chaque fenêtre de travail (WW) étant délimitée par un repère de positionnement (PM) marqué par le dispositif de marquage de pale (8) ;
un capteur de distance (11) pour détecter la distance entre la surface extérieure de la pale (16a) et la machine d'inspection (1) ; et **en ce que**
le système de marquage de pale (8), la caméra visionique (9), le dispositif d'éclairage (10) et le capteur de distance (11) sont disposés sur la tête du robot (5) ;
le dispositif de manipulation robotique (4) comprend un système d'entraînement pour déplacer la tête du robot (5) verticalement et horizontalement par rapport à chaque fenêtre de travail (WW).

2. Machine d'inspection par ultrasons selon la revendication 1, dans laquelle le dispositif de manipulation robotique (4) est un robot anthropomorphe à 6 axes assurant le libre déplacement de la tête de robot (5) sur la surface extérieure de la pale (16a).

3. Machine d'inspection par ultrasons selon l'une quelconque des revendications 1 à 2, dans laquelle le dispositif de marquage de pale (8) est un dispositif à tampon.

4. Machine d'inspection par ultrasons selon l'une quelconque des revendications 1 à 3, dans laquelle chaque fenêtre de travail (WW) est délimitée horizontalement et verticalement par un repère de positionnement (PM) marqué par le dispositif de marquage de pale (8) et comprend une zone de balayage (SA) définie entre une première ligne verticale (VL1) et une première ligne horizontale (HL1) s'étendant toutes deux à partir dudit repère de positionnement (PM) et une deuxième ligne verticale (VL2) opposée et parallèle à la première ligne verticale (VL1) et une deuxième ligne horizontale (HL2) opposée à la première ligne horizontale (HL1 ).

5. Machine d'inspection par ultrasons selon l'une quelconque des revendications 1 à 4, dans laquelle la tête de balayage (6) comprend un réseau de capteurs de contrôle par ultrasons (7) alignés horizontalement.

6. Machine d'inspection par ultrasons selon l'une quelconque des revendications 1 à 5, dans laquelle le système d'inspection par ultrasons comprend en outre un système de gestion de l'eau (12) incluant au moins un dispositif d'irrigation d'eau (12a) positionné, lorsque le dispositif d'irrigation (12a) est en position d'éjection d'eau, au-dessus de la tête de balayage (6) pour asperger de l'eau entre la surface frontale de la tête de balayage (6) et la surface extérieure de la pale (16a) de sorte que l'eau s'écoule vers le bas sur la surface extérieure de la pale (16a), agissant comme un film d'eau qui couple de façon sonique chaque capteur de contrôle par ultrasons (7) avec la surface extérieure de la pale (16a).

7. Machine d'inspection par ultrasons selon la revendication 6, dans laquelle le système de gestion de l'eau (12) comprend un bac collecteur d'eau (13) positionné, lorsque le dispositif d'irrigation (12a) est en position d'éjection d'eau, sous la tête de balayage (6) pour recueillir l'eau tombant du film d'eau.

8. Dispositif d'inspection par ultrasons selon la revendication 6 ou 7, dans lequel chaque dispositif d'irrigation (12a) est relié à un réservoir d'alimentation en eau (12b) au moyen d'une unité de pompage d'alimentation en eau (12d).

9. Dispositif d'inspection par ultrasons selon la revendication 7, dans lequel le bac de collecte (13) est relié à un réservoir de collecte d'eau (12c) au moyen d'une unité de pompage d'aspiration d'eau (12e).

10. Machine d'inspection par ultrasons selon l'une quelconque des revendications 1 à 9, dans laquelle la base mobile (2, 3) comprend un véhicule à guidage automatique (2) pour déplacer la machine d'inspection (1) d'avant en arrière par rapport à la surface extérieure de la pale (16a) le long d'un chemin horizontal (HP) qui comprend une pluralité de fenêtres de travail (WW).

11. Machine d'inspection à ultrasons selon la revendication 10, dans laquelle la base mobile (2, 3) comprend une plate-forme de support (3) sur laquelle est monté le dispositif de manipulation robotique (4).

12. Machine d'inspection à ultrasons selon la revendication 10 ou 11, dans laquelle le véhicule à guidage automatique (2) comprend un système de navigation électronique programmable pour déplacer la machine d'inspection (1) le long des fenêtres de travail (WW).

13. Machine d'inspection par ultrasons selon la revendication 10, 11 ou 12, dans laquelle le véhicule à guidage automatique (2) comprend des roues motrices propulsées par au moins un moteur électrique alimenté par un deuxième système d'alimentation électrique (15).

14. Machine d'inspection par ultrasons selon la revendication 13, dans laquelle le deuxième système d'alimentation électrique (15) comprend au moins une batterie rechargeable montée sur la base mobile (2, 3).
